# EUROPEAN PATENT SPECIFICATION

(11) **EP 2 519 454 B1**
(45) Date of publication and mention of the grant of the patent: **21.02.2018**
(21) Application number: 10841694.2
(22) Date of filing: 29.12.2010
(51) Int. Cl.: B65D 65/40, B65D 81/26, B65D 30/08, B24D 5/12, B65B 11/00, B24D 3/34, B65D 81/24, B65D 85/58

(54) **PACKAGED ABRASIVE ARTICLES**
VERPACKTE SCHLEIFARTIKEL
OBJETS ABRASIFS EMBALLÉS

(30) Priority: 31.12.2009 US 291738 P
(43) Date of publication of application: 07.11.2012
(73) Proprietor: Saint-Gobain Abrasives, Inc., Worcester, MA 01615-0138 (US); Saint-Gobain Abrasifs, 78700 Conflans-Sainte-Honorine (FR)
(72) Inventor: ZHANG, Han, Shrewsbury, MA 01545 (US); WOOLLEY, David E., Pittsburg, PA 15217 (US)
(74) Representative: Zimmermann & Partner Patentanwälte mbB
(86) International application number: PCT/US2010/062421
(87) International publication number: WO 2011/082261

(56) References cited:
- GB-A- 1 151 935
- GB-A- 1 249 050
- US-A- 4 877 420
- US-A- 4 947 990
- US-A- 4 947 990
- US-A- 5 116 392
- US-A1- 2006 003 121
- US-A1- 2006 003 121
- US-A1- 2007 000 214
- US-A1- 2007 000 214
- US-B1- 6 764 574
- US-B1- 6 764 574

## Description

### FIELD OF THE DISCLOSURE

This disclosure, in general, relates to packaged abrasive articles.

### BACKGROUND

Abrasive articles are used in various industries to machine work pieces by cutting, lapping, grinding, or polishing. The use of abrasive articles for machining spans a wide industrial scope from construction to shipyards, foundries to railroads, or even to do-it-yourself applications. In particular, thin grinding wheels can be used to cut metals, such as steel, stainless steel, and aluminum; polyvinylchloride and other plastics; composites; woods; and ceramics. For example, thin abrasive wheels can be used to cut I-beams, pipes, or tiles.

However, many bonded abrasive systems suffer from degradation in performance over time. In the case of thin wheel cutting systems, degradation includes a reduction in the amount of cutting that can be achieved before the thin wheeled abrasive wears out. In addition, degradation can include an increase in wear rate of the abrasive article or a reduction in grind rate on a work piece.

As such, an improved packaged abrasive article system would be desirable.

A packaged abrasive article according to the invention is disclosed in claim 1.

US 2007/0000214 A1 discloses a packaged abrasive article according to the preamble of claim 1.

### BRIEF DESCRIPTION OF THE DRAWINGS

The present disclosure may be better understood, and its numerous features and advantages made apparent to those skilled in the art by referencing the accompanying drawings.
FIG. 1 includes an illustration of an exemplary packaged abrasive article.
FIG. 2 includes an illustration of an exemplary sheet material.
FIG. 3 includes an illustration of an exemplary packaged article according to the present invention.
FIG. 4 includes an illustration of an exemplary wall material according to the present invention.
FIG. 5 and FIG. 6 include flow charts of exemplary methods for packaging abrasive articles.
FIG. 7, FIG. 8, and FIG. 9 include graphs of moisture gain for abrasive articles.
FIG. 10 and FIG. 11 include graphs of internal relative humidity (RH) for different packaging materials.
FIG. 12 and FIG. 13 include graphs of internal relative humidity (RH) for different packaging materials in the presence of a desiccant.

The use of the same reference symbols in different drawings indicates similar or identical items.

### DESCRIPTION OF THE PREFERRED EMBODIMENT(S)

In an exemplary embodiment, a packaged abrasive article includes a packaging defining an enclosed space and one or more abrasive articles disposed within the enclosed space. The abrasive articles include abrasive grains embedded in a polymer matrix. The polymer matrix can be hygroscopic. The packaging has a water vapor transfer rate (WVTR) of not greater than 2.0 g/m²-day, such as not greater than 0.015 g/m²-day. In an example, the water vapor transfer rate (WVTR) of the packaging material can be in a range of 0.001 g/m²-day to 0.015 g/m²-day. In another example, the packaging material has a water vapor transfer rate (WVTR) of not greater than 0.001 g/m²-day. In a further example, the packaging material can include a sheet material. Alternatively, the packaging material includes a self-supporting material, such as a material formed of a support material and a barrier material.

In a further example, a method of preparing a packaged abrasive system includes determining a water vapor transfer rate (WVTR) of the packaging material, establishing conditions associated with a rating system, and determining an amount of desiccant to be used in the packaging to achieve a rating standard associated with the rating system. For example, the water vapor transfer rate and the conditions associated with the rating system can be applied to a simulation device that determines an amount of desiccant to be included within the packaging to achieve the rating standard.

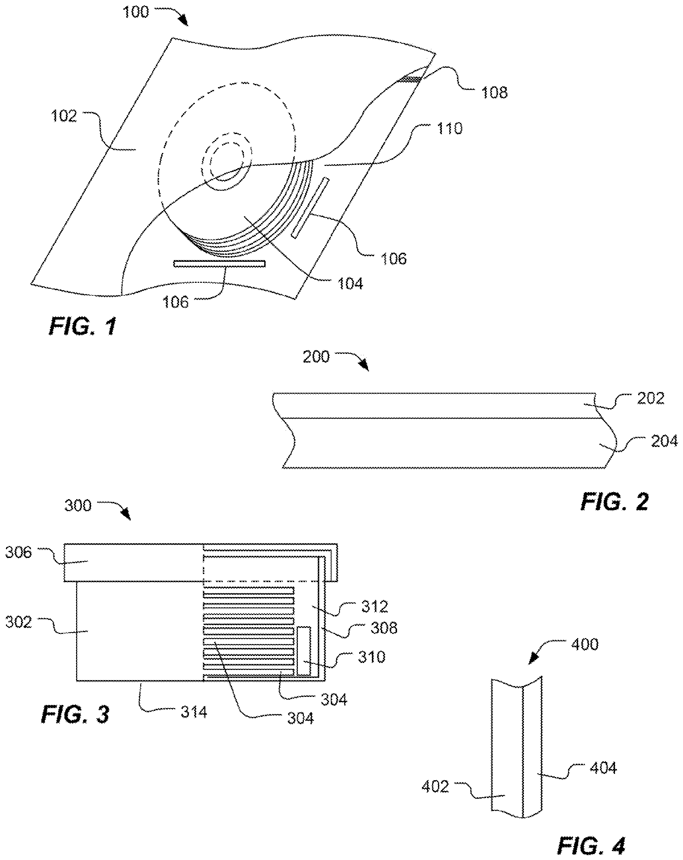

In an embodiment illustrated in FIG. 1, a packaged abrasive article 100 includes a sheet material 102 and defines an enclosed space 110 in which abrasive articles 104 are disposed. As illustrated, the abrasive articles 104 are enclosed in a vacuum sealable pouch. Alternatively, an insert such as a cardboard insert or a stiff polymeric insert can be provided in the pouch or can be formed to one side of the pouch. In a particular example, the packaged abrasive article 100 can be configured to reseal after opening, for example, using fastening structures 108. The abrasive articles 104 can be useful on handheld tools, particularly tools that rotate the abrasive articles 104 around a central axis. In FIG. 1, the abrasive articles 104 are illustrated as thin cutting wheels.

In an example, the abrasive articles 104 are formed of abrasive grains bound by a binder system, such as an inorganic resin system. Exemplary abrasive grains include any one of or any combination of abrasive grains, including silica, alumina (fused or sintered), zirconia, zirconia/alumina oxides, silicon carbide, garnet, diamond, cubic boron nitride, silicon nitride, ceria, titanium dioxide, titanium diboride, boron carbide, tin oxide, tungsten carbide, titanium carbide, iron oxide, chromia, flint, emery, or any combination thereof. In an example, the abrasive grains include at least one type of primary abrasive grain selected from the group of abrasive families consisting of seeded or unseeded sol gel alumina or Al₂O₃-ZrO₂. A non-exhaustive list of abrasive grains from the seeded or unseeded sol gel alumina family that can be used include SG grain or NQ grain, commercially available from Saint-Gobain Abrasives, Inc. of Worcester, MA, 3M321 Cubitron grain or 3M324 Cubitron grain commercially available from 3M Corporation of St. Paul, MN, or combinations thereof. A non-exhaustive list of abrasive grains from the Al₂O₃-ZrO₂ family that can be used include NZ Plus grain, commercially available from Saint-Gobain Abrasives, Inc. of Worcester, MA, ZF grain or ZS grain, commercially available from Saint-Gobain Abrasives, Inc. of Worcester, MA, ZK40 grain or ZZK40 grain, commercially available from Treibacher Industry, Inc. of Toronto, Ontario CA, or ZR25B grain or ZR25R grain, commercially available from Alcan, Inc. of Montreal, Quebec CA. In an example, the amount of the primary abrasive grain comprises between about 0 percent to about 100 percent of the total amount of abrasive grain by volume.

In an embodiment, at least one type of secondary abrasive grain can be blended with the primary abrasive grain to achieve either cost or performance requirements. The secondary abrasive grain can be selected from the group consisting of ceramic oxides (e.g., coated or non-coated fused Al₂O₃, monocrystal Al₂O₃), minerals (e.g., garnet and emery), nitrides (e.g., Si₃N₄, AlN) and carbides (e.g., SiC). In an example, the amount of the secondary abrasive grain can range from about 100 to about 0 percent of the total amount of abrasive grain by volume or balance.

An exemplary binder system includes one or more organic resins, such as phenolic resin, boron-modified resin, nano-particle-modified resin, urea-formaldehyde resin, acrylic resin, epoxy resin, polybenzoxazine, polyester resin, isocyanurate resin, melamine-formaldehyde resin, polyimide resin, other suitable thermosetting or thermoplastic resins, or any combination thereof.

Specific, non-limiting examples of resins that can be used include the following: the resins sold by Dynea Oy, Finland, under the trade name Prefere and available under the catalog/product numbers 8522G, 8528G, 8680G, and 8723G; the resins sold by Hexion Specialty Chemicals, OH, under the trade name Rutaphen® and available under the catalog/product numbers 9507P, 8686SP, and SP223; and the resins sold by Sumitomo, formerly Durez Corporation, TX, under the following catalog/product numbers: 29344, 29346, and 29722. In an example, the bond material comprises a dry resin material.

An exemplary phenolic resin includes resole and novolac. Resole phenolic resins can be alkaline catalyzed and have a ratio of formaldehyde to phenol of greater than or equal to one, such as from 1:1 to 3:1. Novolac phenolic resins can be acid catalyzed and have a ratio of formaldehyde to phenol of less than one, such as 0.5:1 to 0.8:1.

An epoxy resin can include an aromatic epoxy or an aliphatic epoxy. Aromatic epoxies components include one or more epoxy groups and one or more aromatic rings. An example aromatic epoxy includes epoxy derived from a polyphenol, e.g., from bisphenols, such as bisphenol A (4,4'-isopropylidenediphenol), bisphenol F (bis[4-hydroxyphenyl]methane), bisphenol S (4,4'-sulfonyldiphenol), 4,4'-cyclohexylidenebisphenol, 4,4'-biphenol, or 4,4'-(9-fluorenylidene)diphenol. The bisphenol can be alkoxylated (e.g., ethoxylated or propoxylated) or halogenated (e.g., brominated). Examples of bisphenol epoxies include bisphenol diglycidyl ethers, such as diglycidyl ether of Bisphenol A or Bisphenol F. A further example of an aromatic epoxy includes triphenylolmethane triglycidyl ether, 1,1,1-tris(p-hydroxyphenyl)ethane triglycidyl ether, or an aromatic epoxy derived from a monophenol, e.g., from resorcinol (for example, resorcin diglycidyl ether) or hydroquinone (for example, hydroquinone diglycidyl ether). Another example is nonylphenyl glycidyl ether. In addition, an example of an aromatic epoxy includes epoxy novolac, for example, phenol epoxy novolac and cresol epoxy novolac. Aliphatic epoxy components have one or more epoxy groups and are free of aromatic rings. The external phase can include one or more aliphatic epoxies. An example of an aliphatic epoxy includes glycidyl ether of C2-C30 alkyl; 1,2 epoxy of C3-C30 alkyl; mono or multi glycidyl ether of an aliphatic alcohol or polyol such as 1,4-butanediol, neopentyl glycol, cyclohexane dimethanol, dibromo neopentyl glycol, trimethylol propane, polytetramethylene oxide, polyethylene oxide, polypropylene oxide, glycerol, and alkoxylated aliphatic alcohols; or polyols. In one embodiment, the aliphatic epoxy includes one or more cycloaliphatic ring structures. For example, the aliphatic epoxy can have one or more cyclohexene oxide structures, for example, two cyclohexene oxide structures. An example of an aliphatic epoxy comprising a ring structure includes hydrogenated bisphenol A diglycidyl ether, hydrogenated bisphenol F diglycidyl ether, hydrogenated bisphenol S diglycidyl ether, bis(4-hydroxycyclohexyl)methane diglycidyl ether, 2,2-bis(4-hydroxycyclohexyl)propane diglycidyl ether, 3,4-epoxycyclohexylmethyl-3,4-epoxycyclohexanecarboxylate, 3,4-epoxy-6-methylcyclohexylmethyl-3,4-epoxy-6-methylcyclohexanecarboxylate, di(3,4-epoxycyclohexylmethyl)hexanedioate, di(3,4-epoxy-6-methylcyclohexylmethyl)hexanedioate, ethylenebis(3,4-epoxycyclohexanecarboxylate), ethanedioldi(3,4-epoxycyclohexylmethyl) ether, or 2-(3,4-epoxycyclohexyl-5,5-spiro-3,4-epoxy)cyclohexane-1,3-dioxane.

An exemplary multifunctional acrylic can include trimethylolpropane triacrylate, glycerol triacrylate, pentaerythritol triacrylate, methacrylate, dipentaerythritol pentaacrylate, sorbitol triacrylate, sorbital hexacrylate, or any combination thereof. In another example, an acrylic polymer can be formed from a monomer having an alkyl group having from 1-4 carbon atoms, a glycidyl group or a hydroxyalkyl group having from 1-4 carbon atoms. Representative acrylic polymers include polymethyl methacrylate, polyethyl methacrylate, polybutyl methacrylate, polyglycidyl methacrylate, polyhydroxyethyl methacrylate, polymethyl acrylate, polyethyl acrylate, polybutyl acrylate, polyglycidyl acrylate, polyhydroxyethyl acrylate and mixtures thereof.

Depending upon the catalyzing agents and type of polymer, the binder system can be thermally curable or can be curable through actinic radiation, such as UV radiation, to form the binder system.

The binder system can also include catalysts and initiators. For example, a cationic initiator can catalyze reactions between cationic polymerizable constituents. A radical initiator can activate free-radical polymerization of radically polymerizable constituents. The initiator can be activated by thermal energy or actinic radiation. For example, an initiator can include a cationic photoinitiator that catalyzes cationic polymerization reactions when exposed to actinic radiation. In another example, the initiator can include a radical photoinitiator that initiates free-radical polymerization reactions when exposed to actinic radiation. Actinic radiation includes particulate or non-particulate radiation and is intended to include electron beam radiation and electromagnetic radiation. In a particular embodiment, electromagnetic radiation includes radiation having at least one wavelength in the range of about 100 nm to about 700 nm and, in particular, wavelengths in the ultraviolet range of the electromagnetic spectrum.

The binder system can also include other components such as solvents, plasticizers, crosslinkers, chain transfer agents, stabilizers, dispersants, curing agents, reaction mediators and agents for influencing the fluidity of the dispersion. For example, the binder system can also include one or more chain transfer agents selected from the group consisting of polyol, polyamine, linear or branched polyglycol ether, polyester and polylactone.

Further, the binder system can include a filler. The fillers can include active and/or inactive fillers. A non-exhaustive list of active fillers can include Cryolite, PAF, KBF₄, K₂SO₄, barium sulfate, sulfides (FeS₂, ZnS), NaCl/KCl, low melting metal oxides, or combinations thereof. A non-exhaustive list of inactive fillers can include CaO, CaCO₃, Ca(OH)₂, CaSiO₃, Kyanite (a mixture of Al₂O₃-SiO₂), Saran (Polyvinylidene chloride), Nephenline (Na, K) AlSiO₄, wood powder, coconut shell flour, stone dust, feldspar, kaolin, quartz, other forms of silica, short glass fibers, asbestos fibers, balotini, surface-treated fine grain (silicon carbide, corundum etc.), pumice stone, cork powder and combinations thereof. In a preferred embodiment, an active filler material, such as PAF, which is a mixture of K₃AlF₆ and KAlF₄, can be added to the organic bond material in order to corrode metals and reduce the friction between the wheel and work piece.

In a particular embodiment, the formulation of the abrasive mix used to form abrasive article 104 can be as follows. In an embodiment, the abrasive grains present in the mix can range from about 30 to about 70 percent by volume of the total mix (i.e., excluding porosity). In another embodiment, the abrasive grains present in the mix can range from about 40 to about 55 percent by volume of the total mix (i.e., excluding porosity). In one embodiment, the organic bond material (e.g., resin) in the mix can range from about 20 to about 45 percent by volume of the total mix. In another embodiment, the organic bond material (e.g., resin) in the mix can range from about 25 to about 40 percent by volume of the total mix. In an embodiment, the active filler materials in the mix can be in an amount that ranges from about 0 to about 25 percent by volume (amount in the total mix). In another embodiment, the active filler materials in the mix can be in an amount that ranges from about 5 to about 20 percent by volume (amount in the total mix). The balance will be inactive fillers.

In particular, the inorganic resin system can be hygroscopic or can include hygroscopic materials. Such hygroscopic materials can absorb water over time as it traverses the packaging material 102. It is believed that after moisture in the product exceeds certain level, the glass transition temperature of the binder matrix is reduced, resulting in the grinding performance degradation especially for dry grinding / cutting applications.

Further, the abrasive article 104 can include one or more reinforcement layers. A reinforcement layer can be made of any number of various materials. An exemplary reinforcement layer includes a polymeric film (including primed films), such as a polyolefin film (e.g., polypropylene including biaxially oriented polypropylene), a polyester film (e.g., polyethylene terephthalate), or a polyamide film; a cellulose ester film; a metal foil; a mesh; a foam (e.g., natural sponge material or polyurethane foam); a cloth (e.g., cloth made from fibers or yams comprising fiberglass, polyester, nylon, silk, cotton, poly-cotton or rayon); a paper; a vulcanized paper; a vulcanized rubber; a vulcanized fiber; a nonwoven material; or any combination thereof; or treated versions thereof. A cloth backing can be woven or stitch bonded. In particular examples, the reinforcement layer is selected from a group consisting of paper, polymer film, cloth, cotton, poly-cotton, rayon, polyester, poly-nylon, vulcanized rubber, vulcanized fiber, fiberglass fabric, metal foil or any combination thereof. In other examples, the reinforcement layer includes a woven fiberglass fabric. In a particular example, the abrasive article 104 includes one more layers of fiberglass between which abrasive grains are bound in a polymer matrix. For example, the abrasive article 104 can have a configuration of aVa, VaV, VaVa, or VaVaV in which "V" is a reinforcement layer and "a" is an abrasive/binder mixture.

In the illustrated example, the abrasive article 104 is in the form of a thin-wheel abrasive article, such as a thin-wheel abrasive article for cutting applications. For example, the abrasive article can have a thickness, defined parallel to an axis of the abrasive article 104 and orthogonal to a radial dimension, in a range of 0.8 mm to 20 mm, such as a range of 0.8 mm to 15 mm, or even a range of 0.8 mm to 10 mm. Further, the thin-wheel abrasive article can have a diameter in a range of 50 mm to 400 mm, such as a diameter in a range of 75 mm to 230 mm, or even a range of 75 mm to 150 mm. In addition, the thin-wheel abrasive article can have a desirable aspect ratio, defined as the ratio of the diameter to the thickness, in a range of 5 to 160, such as a range of 15 to 160, a range of 15 to 150, or even a range of 20 to 125.

Returning to FIG. 1, the sheet material 102 can be formed as a single layer structure or can include multiple layers. For example, as illustrated in FIG. 2, the sheet material 200 can include a barrier material 202 and optionally a support material 204. In an example, the barrier layer 202 can be formed of a metal layer or a polymeric material. For example, a metal can include aluminum, copper, nickel or alloys thereof. An exemplary polymer can include a polyester. In an example, the polyester includes a polyethylene terephthalate, liquid crystal polymer, or any combination thereof. An exemplary liquid crystal polymer includes aromatic polyester polymers, such as those available under tradenames XYDAR® (Amoco), VECTRA® (Hoechst Celanese), SUMIKOSUPER™ or EKONOL™ (Sumitomo Chemical), DuPont HX™ or DuPont ZENITE™ (E.I. DuPont de Nemours), RODRUN™ (Unitika), GRANLAR™ (Grandmont), or any combination thereof.

In an example, the barrier layer 202 can have a thickness of at least 1 microns. For example, the thickness can be at least 10 microns, such as at least 100 microns, at least 125 microns, or even at least 500 microns. In a particular case in which the barrier material includes aluminum, the thickness is at least 1 microns. In contrast, typical metallized polymeric films include metal layer thicknesses on the order of less than 200 nanometers. While a single barrier layer 202 is illustrated, the sheet material 200 can include more than one barrier layer.

Optionally, the sheet material 200 includes a support layer 204. The support layer 204 can provide structural integrity to the barrier layer 202, can enhance mechanical properties of the sheet material 200, or can act to bond to itself to form a seal. In an example, the support layer 204 can include a thermoplastic material such as acrylic, vinyl acetate, ethylene vinyl acetate copolymer, polyester, polyolefin, polyamide, polycarbonate, polyvinylchloride, polyvinylidene chloride, polystyrene, or any copolymer, blend or combination thereof. An exemplary polyolefin includes polyethylene, polypropylene, ethylene propylene copolymer, ethylene butene copolymer, ethylene octene copolymer, olefinic block copolymers, polyvinyl butyral, or any combination thereof. An exemplary polyethylene includes linear low density polyethylene (LLDPE), low density polyethylene (LDPE), medium density polyethylene (MDPE), high density polyethylene (HDPE), or any combination thereof. In particular, the thermoplastic material can be a melt adhesive that can be melted in locations and bonded to an opposing sheet material to form a seal around an enclosed volume. Alternatively, a melt adhesive can be placed proximal to locations at which a seal is to be formed, such as along an edge of the sheet material 102.

Returning to FIG. 1, the sheet material 102 has a desirable water vapor transfer rate of not greater than 2.0 g/m²-day. For example, the water vapor transfer rate can be not greater than 0.6 g/m²-day, such as not greater than 0.2 g/m²-day, not greater than 0.015 g/m²-day, or even not greater than 0.01 g/m²-day. In a particular example, the water vapor transfer rate is in a range of 0.001 g/m²-day to 0.01 g/m²-day. In such an example, the packaging can include a desiccant 106. In an alternative example, the water vapor transfer rate is not greater than 0.001 g/m²-day, such as not greater than 0.0005 g/m²-day, and may or may not include desiccant.

The enclosed volume 110 can also include a desiccant 106. An exemplary desiccant 106 includes a metal oxide or hydroxide scavenger, a metal sulfate scavenger, a metal halide scavenger, a metal silicate, other inorganic scavengers, an organometallic scavenger, a metal ligand, organic scavengers, or any combination thereof. In an example, a metal includes an alkali metal, such as lithium; an alkaline earth metal, such as beryllium, calcium, magnesium, or barium; a transition metal, such as iron, manganese, palladium, zirconium, cobalt, copper, zinc, titanium, or chromium; other metals, such as aluminum; alloys thereof, or any combination thereof. An exemplary metal oxide scavenger includes dehydrated or partially dehydrated oxides of the above metals, such as calcium oxide, barium oxide, cobalt oxide, magnesium oxide, alumina, titanium oxide, zirconia, zinc oxide, or any combination thereof. An exemplary metal halide can include a halide or perchlorate of a metal listed above, or an exemplary metal sulfate can include a sulfate of a metal listed above, such as sodium sulfate, calcium sulfate, barium sulfate, copper sulfate, or any combination thereof. Another inorganic scavenger can include a montmorillonite clay, a zeolite, activated carbon, silica gel, alumina gel, bauxite, or any combination thereof. In a particular example, the desiccant 106 can have a capacity of at least 0.4 g H2O/ g Desiccant, such as a capacity in a range of 0.4 g H2O/ g Desiccant to 2.0 g H2O/ g Desiccant.

In addition, the packaged abrasive article 100 can be resealable after opening. For example, proximate to an opening, the packaged abrasive article 100 can include a fastener 108 operable by a user to close and seal the packaged abrasive article 100. In an example, the fastener 108 includes a pressure sensitive adhesive. In another example, the fastener 108 includes a mechanical fastener, such as a strip fastener. According to the invention as illustrated in FIG. 3, a packaged abrasive article 300 includes at least one self-supporting wall 302 defining an edge of an enclosed space 312 in which abrasive articles 304 are disposed. The packaged abrasive article 300 can also include a bottom 314 and can include a top 306. In an example, the bottom 314 can be formed of the same material as the wall 302. Alternatively, the bottom 314 can be formed of a different material than the wall 302. The bottom 314 can be friction fit with the wall 302. In another example, the wall 302 can have a screw configuration. In a further example, the bottom 314 can be integrally formed with the wall 302 or can be adhered to the wall 302, such as with an adhesive.

The top 306 can be secured to the wall 302 by a friction fitting. In another example, the top 306 can be secured to the wall 302 using a screw top configuration. In an example, the top 306 can be formed of a material similar to the wall 302. In an alternative example, the top 306 can be formed of a material different from the wall 302.

The wall 302, the top 306, and the bottom 314 form an enclosed space 312 in which the abrasive articles 304 are disposed. In an example, the abrasive articles 304 are the abrasive articles as described above, such as thin-wheel abrasive articles. In addition, a desiccant 310 can be disposed within the enclosed space 312. An exemplary desiccant can be selected from the desiccants described above.

As illustrated in cross section, the wall 302 is formed of a self-supporting material 308. A self-supporting material 308 is a material that can stand on its own absent additional support. For example, the self-supporting material 308 can stand on its own (i.e., under its own weight without external forces) without deviating more than 10% in either direction from a longitudinal dimension extending from top to bottom of the self-supporting material 308 when viewed in cross-section.

The material 308 has a multilayer construction, as illustrated in FIG. 4. The self-supporting material 400 includes a support material 402 and a barrier material 404. The barrier material 404 includes a metal layer and a polymeric material. For example, a metal can include aluminum, copper, nickel or alloys thereof. An exemplary polymer can include a polyester. In an example, the polyester includes a polyethylene terephthalate, liquid crystal polymer, or any combination thereof. An exemplary liquid crystal polymer includes aromatic polyester polymers, such as those available under tradenames XYDAR® (Amoco), VECTRA® (Hoechst Celanese), SUMIKOSUPER™ or EKONOL™ (Sumitomo Chemical), DuPont HX™ or DuPont ZENITE™ (E.I. DuPont de Nemours), RODRUN™ (Unitika), GRANLAR™ (Grandmont), or any combination thereof. While the barrier material 404 is illustrated as a single layer, more than one barrier layers can be included. The barrier material 404 can have the thickness described above in relation to the barrier layer 202.

The barrier material 404 can be secured to the support material 402 through lamination or with an adhesive (not shown). The support material 402 includes a fibrous material, and may further include a thermoplastic material, a cured elastomer, or any combination thereof. An exemplary fibrous material can include an impregnated glass fiber material. In another example, a fibrous material includes a pulp material, such as a paper product, a cardboard, or any combination thereof. In another example, the support material includes a thermoplastic material in a thickness to provide desirable self-supporting characteristics of the support material 402. In an example, the thermoplastic material includes polyolefin, polyvinylchloride, polyester, ethylene vinyl acetate copolymer, polyvinylidene chloride, polystyrene, acrylic polymer, vinyl acetate, polyamide, polycarbonate, a copolymer thereof, or any combination thereof. For example, the thermoplastic material can be a polyolefin material, such as polyethylene, polypropylene, ethylene propylene copolymer, ethylene butene copolymer, ethylene octene copolymer, olefinic block copolymers, polyvinyl butyral, or any combination thereof. An exemplary polyethylene includes linear low density polyethylene (LLDPE), low density polyethylene (LDPE), medium density polyethylene (MDPE), high density polyethylene (HDPE), or any combination thereof. In a further example, the support material 402 includes a cured elastomer. An exemplary cured elastomer includes a diene elastomer such as an ethylene propylene diene monomer (EPDM) elastomer.

Returning to FIG. 3, the wall 302 has a desirable water vapor transfer rate, i.e. a water vapor transfer rate of not greater than 0.6 g/m²-day, such as not grater than 0.2 g/m²-day, not greater than 0.015 g/m²-day, or even not greater than 0.01 g/m²-day. In a particular example, the water vapor transfer rate is in a range of 0.001 g/m²-day to 0.01 g/m²-day. In such an example, the packaging can include a desiccant 310. In an alternative example, the water vapor transfer rate is not greater than 0.001 g/m²-day, such as not greater than 0.0005 g/m²-day, and may or may not include desiccant.

In particular, Applicants have discovered that to meet product quality desired by consumers, particularly under extreme environmental conditions, commercially available packaging is insufficient. Applicants discovered that even the reported water vapor transfer rates in commercially available products can lead to relative humidity within the packaging of greater than 20% in demanding environments. Further, Applicants have discovered that providing a reduced humidity environment for the bonded abrasive articles results in unchanged grind performance over an extended period.

In an example, the packaging material of the packaged abrasive articles can provide a Relative G-Ratio, as defined below, of at least 0.7 for external conditions of 40°C and 80% RH over a 12 week period, such as at least 0.8, at least 0.85, at least 0.9, or even at least 0.95, such as approximately 1.0.

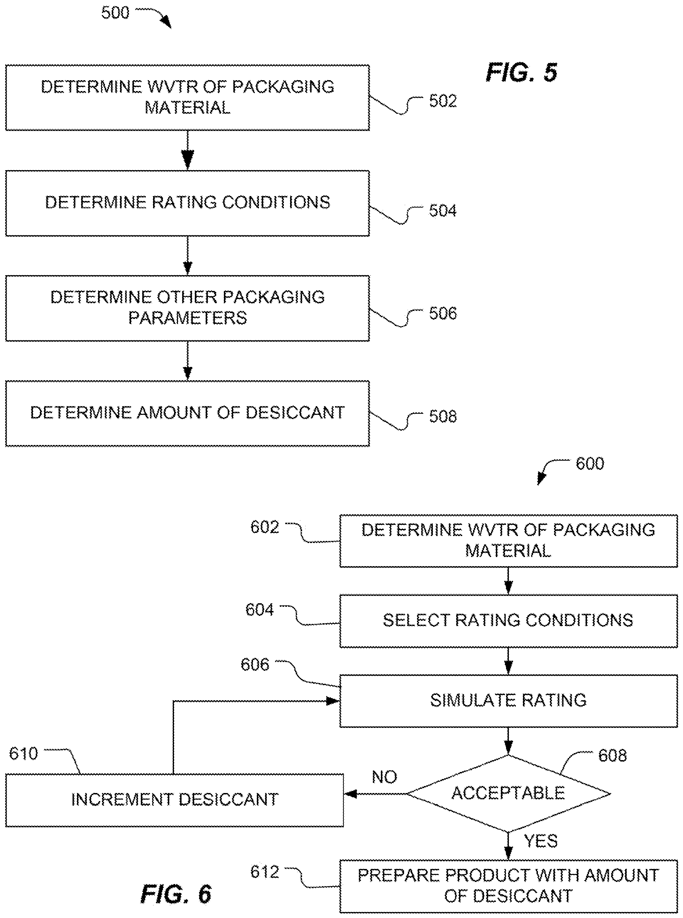

As illustrated in FIG. 5, a method 500 for preparing a packaged abrasive article includes determining a water vapor transfer rate of a packaging material, as illustrated at 502. In an example, the water vapor transfer rate (WVTR) can be determined using ASTM F1249-01 (Standard Test Method for Water Vapor Transmission Rate Through Plastic Film and Sheeting Using a Modulated Infrared Sensor). Alternatively, the water vapor transfer rate (WVTR) can be approximated using the material properties of the packaging material.

In addition, the method 500 includes establishing the rating conditions, as illustrated in 504. In an example, a rating system includes rating conditions to which an article to be tested is subjected and includes a rating standard relative to which performance of an exposed article is compared. A particular rating system includes testing a packaged abrasive article under conditions of a particular temperature and a particular external relative humidity for a specified period (e.g., in total, equal to a desired shelf life). For example, the rating condition can include a temperature of 25°C and a relative humidity of 70% for 25 weeks. In another example, the temperature can be 40°C and the relative humidity can be 80% for 25 weeks. In an alternative example, a set of conditions to be applied during contiguous periods can be specified. For example, a set of conditions selecting a temperature in a range of 20°C to 40°C and a relative humidity in a range of 40% to 90% for contiguous periods of time, such as between 2 and 8 contiguous periods, each having a length of between 1 hours and 8 hours, can be specified. The rating standard can be expressed in terms of a not-to-exceed amount, such as a not-to-exceed internal relative humidity on an inside of the packaging or a not-to-exceed amount of moisture gain in the abrasive article, over the period of time (e.g., desired shelf life) of the rating conditions, such as a period selected between 10 to 30 weeks, a range of 10 to 25 weeks, or even a range of 10 to 20 weeks. An exemplary rating standard includes not greater than 50% relative humidity (RH) at 20°C for a period of 12 weeks, not greater than 50% relative humidity at 20°C for a period of 25 weeks, or not greater than 0.6wt% moisture gain over a period of 25 weeks.

Once a rating and associated conditions are determined, a set of parameters can be applied, as illustrated at 506. For example, the surface area of the packaging, the capacity of a desiccant, an absorption rate constant for the desiccant, an amount of abrasive articles, capacity and absorptive rate constants for the abrasive articles, the volume of an enclosed space, or any combination thereof, can be approximated. In particular, parameters such as the capacity and absorption rate constant of the desiccant or abrasive articles can be determined experimentally.

Each of these factors can be applied to a simulation device and the simulation device can determine an amount of desiccant to be included within the packaged abrasive article, as illustrated at 508. In an example, a simulation device includes a computational device configured to solve a set of equations, one of which can include a differential equation. In particular, a simulation device is configured to integrate the differential equation, for example, using numerical techniques. In a particular example, the simulation device can perform an iterative process to determine an amount of desiccant. For example, the simulation device can incrementally add desiccant, integrate to determine whether the rating standard is achieved, and if the rating standard is not achieved, increment the amount of desiccant and perform the integration again.

For example, as illustrated in the method 600 of FIG. 6, the method 600 can include determining a water vapor transfer rate (WVTR) of a packaging material, as illustrated at 602. For example, the water vapor transfer rate (WVTR) of a particular sheet material or self-supporting material can be measured in according with an ASTM standard. A set of rating conditions can be selected, as illustrated at 604. For example, the rating conditions can include a temperature, a relative humidity, and a period of time. A rating standard can include a relative humidity inside the packaging not to be exceeded.

A simulation device can be used to determine whether the parameters associated with the packaging material are adequate to provide a rating as prescribed, as illustrated at 606. For example, the simulation device can access the parameters and can integrate a set of relationships based on the provided conditions and water vapor transfer rate (WVTR) to provide an output that can be compared with a set of rating standards. In a particular example, the rate of change of the internal relative humidity is a function of a rate of water vapor transfer into the packaging. The rate of water vapor transfer is proportional to a difference in the internal and external relative humidities. In addition, the internal relative humidity can be a function of the absorption of moisture by a desiccant or the abrasive article. The rate of absorption of moisture by the desiccant or abrasive article can be proportional to the internal relative humidity and a function of the temperature.

As illustrated 608, it is determined whether the rating is met. For example, the simulation device can determine whether the packaging materials are adequate to limit the relative humidity or water weight gain in the abrasive article to less than a specified amount over a period of time. When the rating standard is not met, an incremental amount of desiccant can be added to the packaging material as illustrated at 610. The simulation device can again determine based on the rating conditions a relative humidity (RH) or moisture gain in an abrasive product, and compare the relative humidity (RH) or moisture gain to the rating standard, as illustrated in 606 and 608. The process can be iterated until the rating standard is achieved. When the rating standard is achieved, packaged abrasive products can be prepared using the amount of desiccant determined through the iterative process, as illustrated at 612.

In a particular example, the rating conditions internal to the packaging, such as the relative humidity or moisture gain of the abrasive product can be expressed in terms of a differential equation that is integrated, such as through numerical techniques within the simulation device. For example, a change in relative humidity internal to the packaging can be expressed in terms of an influx of water as a result of the permeability of a packaging material, an amount of water absorbed by the abrasive articles and an amount of water absorbed by a desiccant when present. In an example, the amount of water absorbed by the abrasive article or the amount of water absorbed by the desiccant proportional to the relative humidity internal to the packaging, which is a function of time. For a given a set of external conditions and packaging materials, a simulation device can integrate to determine whether rating conditions are met and when the specified rating conditions are not met, an amount of desiccant can be increased and the integration performed again in an iterative process to determine the amount of desiccant useful for meeting the specified rating conditions.

### EXAMPLES

### Example 1

Abrasive articles are prepared in different geometries from an organic resin matrix and abrasive grains. The abrasive products are made with a cold or warm molding process by spreading the mixture of the bond and abrasives in a mold, followed by pressing into the shape and curing in the oven at typical temperature range of 140°C to 220°C to complete the cross-link process of the organic resin matrix. The organic resin matrix includes phenolic novolac resin and alumina abrasive grains.

The abrasive articles are tested for performance degradation following exposure in an air conditioned environment (∼25°C and 60% RH) for a three-month period. Performance degradation is determined based on G-ratio.

The G-Ratio is determined by mounting the abrasive article on a portable machine for a dry cutting/grinding application that can have an operation speed of about 80 m/s. The work piece material with typical dimensions (25.4 mm (diameter) x 100 (length) m) is clamped by a vise. The test is performed by an experienced operator, who manually conducts testing by using the grinder to perform cutting operations on the work piece material. A data acquisition system connected with the grinder monitors the power and current of the grinder, and cutting time during the testing. The number of pieces cut from the work piece material is counted and the number of cuts is recorded into a computer system along with the diameter of the abrasive article. The testing lasts until the abrasive article is fully consumed. The diameter of the tested article is measured and recorded. The weight of the remaining work piece material can be weighed and recorded or a number of cuts can be recorded. The computer system using a commercially available software application determines material removal rate (MRR) and wheel wear rate (WWR). The application calculates the Absolute G-Ratio by dividing MRR by WWR. A higher Absolute G-Ratio is an indication of better performance.

The Relative G-Ratio is used to characterize the performance degradation of the abrasive article. It is the ratio of the Absolute G-Ratio of abrasive article A after being stored for a specified amount of time at a specified storage condition divided by the Absolute G-Ratio of an abrasive article B (reference) from the same batch production as the abrasive article A, measured immediately after manufacture. Hence, the Relative G-Ratio of abrasive article B when freshly made. A lower value of the Relative G-Ratio indicates performance loss. Performance loss is one minus the relative G-Ratio expressed as a percentage.

It has been found that the loss of the product performance can be in the range of 30 to 60% depending upon the nature and the thickness of the product after storage in either indoor environment with or without air condition control, for two to three months. Table 1 illustrates the performance loss of sample abrasive articles having the identified geometry. The product performance degradation is believed to be caused by moisture or water vapor that permeates the product through diffusion or absorption processes. The performance degradation rate of an abrasive article is the function of storage condition (humidity, temperature, and desired product shelf life, etc.), geometry, and formulation.

**TABLE 1. Performance Loss with Exposure**

| Product Type | Application | Performance Loss (%) |
|---|---|---|
| Type 27 | Grinding | 48% |
| Type 41 | Cut-off | 43% |

### Example 2

Sample wheels are stored in a climate chamber at 40°C / 80% RH humidity with the moisture gain expresses in weight% of the abrasive article. Relative G-Ratio is determined for the sample. As illustrated in Table 2, the sample gains weight over a 21-day period and exhibits a loss of performance as indicated by the decreasing Relative G-Ratio.

**TABLE 2. Performance and Water Weight Gain of Exposed Sample**

| | Fresh | 2-day | 4-day | 7-day | 14-day | 21-day |
|---|---|---|---|---|---|---|
| Relative G-ratio | 1.00 | 0.72 | 0.59 | 0.54 | 0.62 | 0.52 |
| Moisture gain (wt%) | 0.00 | 0.42 | 0.56 | 0.69 | 0.75 | 0.79 |

### Example 3

Sample abrasive articles are packed in packages (6 articles per pack, each having dimensions of 150x200x8 mm). The package is made of single layer pure Al with a water vapor transfer rate (WVTR) of less than 0.0005 g/m²-day. A group of articles is packed with 5 g desiccant (silica gel) and another group is packed without desiccant. The desiccant is silica gel from Fisher Scientific in the size of 6 to 12 mesh. The absorption of the water is 0.4 gram water per gram desiccant.

Both groups of packaged abrasive articles are stored in a climate chamber at 40°C with 80% RH. The weight gain of the abrasive articles is monitored and a Relative G-Ratio is determined for the abrasive articles. Tables 3 and 4 illustrate the moisture gain and Relative G-Ratio for the samples without desiccant and the samples with desiccant, respectively. After 16 weeks, the moisture absorption is close to zero for both sets of samples and little performance loss is observed.

**TABLE 3. Relative G-Ratio and Moisture Gain for Metallic Package Free of Desiccant.**

| | Fresh | 1-week | 2-week | 3-week | 6-week | 9-week | 16-week |
|---|---|---|---|---|---|---|---|
| Relative G-ratio | 1.00 | 1.06 | 1.04 | 0.95 | 1.09 | 0.99 | 1.05 |
| Moisture gain (wt%) | 0.00 | 0.00 | 0.00 | 0.00 | 0.00 | 0.01 | 0.04 |

**TABLE 4. Relative G-Ratio and Moisture Gain for Metallic Package with 5 grams Desiccant**

| | Fresh | 1-week | 2-week | 3-week | 6-week | 9-week | 16-week |
|---|---|---|---|---|---|---|---|
| Relative G-ratio | 1.00 | 1.06 | 1.04 | 0.95 | 1.09 | 0.99 | 1.03 |
| Moisture gain (wt%) | 0.00 | 0.00 | 0.00 | 0.00 | 0.00 | 0.01 | 0.03 |

### Example 4

Sample abrasive articles are packed in packages (6 pieces per pack at a dimension of 150x200x8 mm). The packages are made of the single layer polyethylene material with the WVTR of 3.023 g/m²-day. A group of articles is packed with 5 g desiccant inside the package with the abrasive articles and another group is packed without desiccant. The desiccant is silica gel from Fisher Scientific in the size of 6 to 12 mesh. The absorption of the water is 0.4 gram water per gram desiccant. An amount of 5 grams desiccant provides water absorption of 5 g x 0.4 = 2.0 g.

Both groups of abrasive articles are stored in the climate chamber at 40°C and 80% RH. The weight gain of abrasive article is monitored and the Relative G-Ratio is determined. Table 5 illustrates the moisture gain over a two-week period.

After 7-day storage at the humidity chamber at 40°C / 80% RH, little difference in moisture gain is observed from the abrasive articles stored with or without the polyethylene package. The moisture gain is significantly less for the abrasive articles stored in a polyethylene package with 5 grams desiccant. Hence, shelf life is significantly reduced for samples packaged in polyethylene absent desiccant.

**TABLE 5.**

| | Fresh | 1-day | 2-day | 7-day | 14-day |
|---|---|---|---|---|---|
| No Package | 0.00 | 0.18 | 0.34 | 0.70 | 0.83 |
| Single layer polyethylene Package | 0.00 | 0.12 | 0.18 | 0.69 | 0.82 |
| Single layer polyethylene Package with 5 g Desiccant | 0.00 | 0.03 | 0.06 | 0.31 | 0.43 |

### Example 5

Sample wheels are stored in a climate chamber at 40°C and 80% RH. The samples are weighed to determine moisture gain over a 14 day period. The measured moisture gain is compared to simulations of moisture gain.

The simulation of moisture gain assumes that a change in moisture gain is proportional to partial pressure of water in air surrounding the sample wheel. A proportionality constant is set to 4.545x10⁻¹³ kg/s-Pa, and a capacity of 0.009 g H2O/ g Sample is assumed.

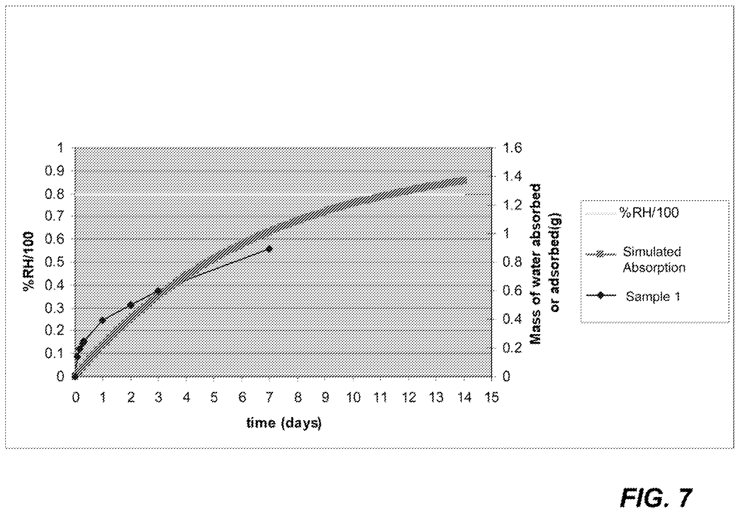

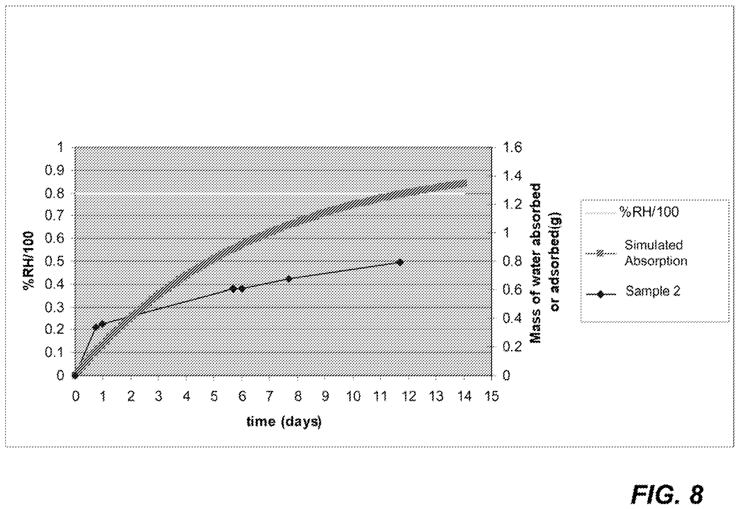

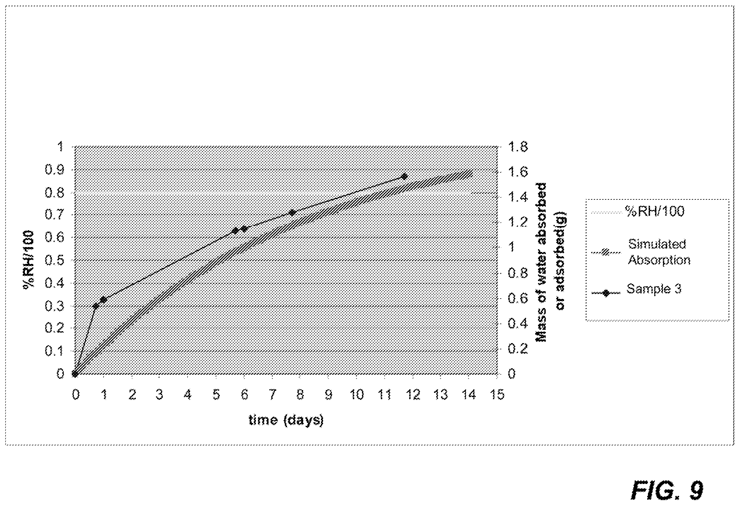

FIG. 7, FIG. 8, and FIG. 9 illustrate a comparison between simulated moisture gain and measured moisture gain for three samples having weight of 217 grams, 212 grams, and 271 grams, respectively. As is illustrated, the simulated moisture gain closely approximates the measured moisture gain, particularly as illustrated in FIG. 7 and FIG. 9

### Example 6

A comparison of packaging of different materials is simulated to determine a time dependent profile of relative humidity (RH) inside the packaging. A change in relative humidity is a function of the water vapor transfer through the packaging material. Simulations are performed assuming external conditions of 40°C and 80%RH over a 12 week period.

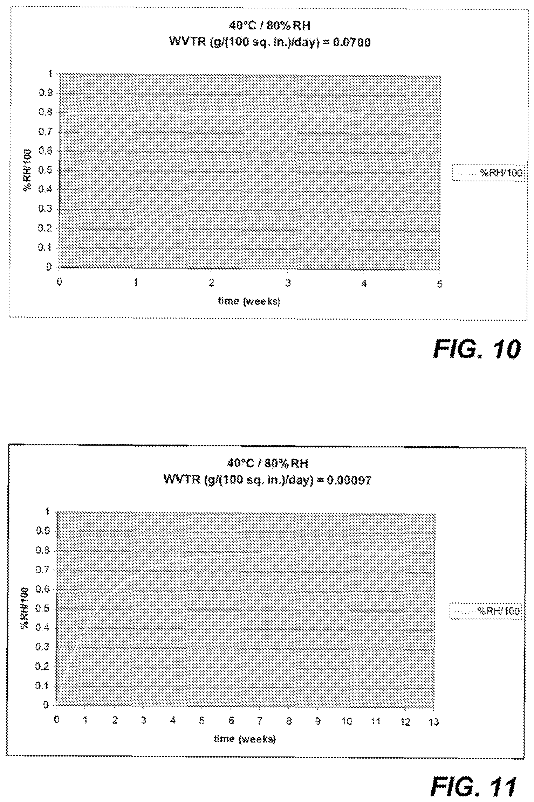

A first sample is a metallized film sample having a water vapor transfer rate (WVTR) of 1.1 g/m²-day. A second sample is an aluminum film having a WVTR of 0.015 g/m²-day. As illustrated in FIG. 10, the relative humidity inside the sample with the metallized film approaches the external humidity in less than a week. FIG. 11 illustrates that the internal relative humidity of the aluminum film sample increases more slowly, nevertheless approaching the external relative humidity before the end of seven weeks.

### Example 7

The samples of Example 6 are again analyzed in the presence of a desiccant, assuming no absorption by the cutting wheels. The external conditions are 40°C and 80% RH. The desiccant has an absorption rate constant of 1.2928x10⁻¹⁰ kg/s-Pa, and a capacity of 0.4 g H₂O/ g Desiccant. Five (5) grams of desiccant are used.

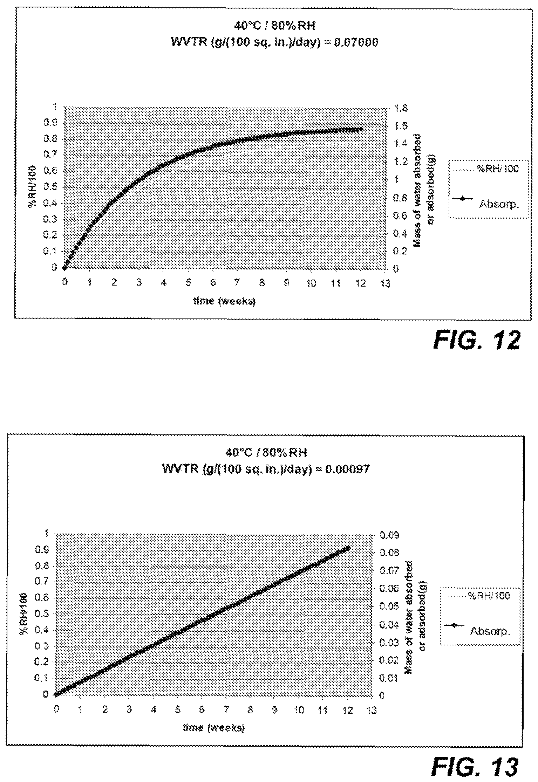

As illustrated in FIG. 12, the desiccant slows the rate of increase of the relative humidity for the metallized film sample. However, the internal relative humidity reaches 80% around week 12, far exceeding the desired internal relative humidity of less than 20% RH. In contrast, as illustrated in FIG. 13, the internal relative humidity remains low for the aluminum film sample throughout the 12 week analysis.

### Example 8

Analysis is performed using a simulation device to determine an upper limit of WVTR permissible under a set of conditions both with and without desiccant. Under a first set of conditions, a constant temperature and relative humidity (25°C, 70% RH) over a 26 week period is assumed. Under a second set of conditions, the environment is assumed to include a 4 week exposure to high temperatures and humidity (40°C, 80% RH) followed by 22 weeks at moderate conditions (25°C, 70% RH). For samples with desiccant, 10 grams of desiccant having the absorption rate constant and capacity described above is used.

**TABLE 6. Upper Limit of WVTR for Scenarios**

| | Storage Time (weeks) | | Desiccant (g) | WVTR (g/m²*day) |
|---|---|---|---|---|
| | at 40 C / 80% RH | at 25 C/ 70% RH | | |
| Case I | 0 | 26 | 0.0 | 0.00041 |
| Case II | | | 10.0 | 0.29000 |
| Case III | 4 | 22 | 0.0 | 0.00080 |
| Case IV | | | 10.0 | 0.60000 |

As illustrated in Table 6, samples without desiccant have upper limits orders of magnitude lower than samples that include desiccant. For example, packaging designs including 10 grams desiccant can have a WVTR of as high as 0.60 g/m²-day, whereas packaging without desiccant has an upper limit of less than 0.0008 g/m²-day.

### Example 9

Analysis is performed for multilayer films having the WVTR specified in Table 7 and Table 8 below. A first multilayer film has a WVTR of 0.0062 g/m²-day, and a second multilayer film has a WVTR of 0.0031 g/m²-day. Analysis is performed at 32°C and 90% RH. As illustrated in the Tables, the internal relative humidity (RH) quickly exceeds 20% RH and approaches 90% over a 120 day period.

**TABLE 7. Internal Relative Humidity for a WVTR of 0.0062 g/m²-day**

| Time (days) | Partial Pressure (Pa) | % RH (at 32°C) |
|---|---|---|
| 0 | 0 | 0 |
| 30 | 3478 | 73 |
| 60 | 4132 | 87 |
| 90 | 4255 | 89 |
| 120 | 4278 | 90 |

**TABLE 8. Internal Relative Humidity for a WVTR of 0.0031 g/m²-day**

| Time (days) | Partial Pressure (Pa) | % RH (at 32°C) |
|---|---|---|
| 0 | 0 | 0 |
| 30 | 2426 | 51 |
| 60 | 3478 | 73 |
| 90 | 3934 | 83 |
| 120 | 4132 | 87 |

In a first aspect, an article includes a packaging material comprising a self-supporting wall having a water vapor transfer rate of not greater than 0.001 g/m²-day. The packaging material defines an enclosed volume. The article further includes a bonded abrasive article disposed within the enclosed volume. The bonded abrasive article includes abrasive grains dispersed in a polymer matrix. The polymer matrix includes hygroscopic material. In an example of the first aspect, the water vapor transfer rate is not greater than 0.0005 g/m²-day.

In another example of the first aspect, the polymer matrix is selected from the group consisting of phenolic resin, boron-modified resin, nano-particle-modified resin, urea-formaldehyde resin, acrylic resin, epoxy resin, polybenzoxazine, polyester resin, isocyanurate resin, melamine-formaldehyde resin, polyimide resin, other suitable thermosetting or thermoplastic resins, or any combination thereof. For example, the polymer matrix can be a phenolic resin.

In a further example of the first aspect, the self-supporting wall includes a support material and a barrier material. The barrier material can include polyester. In another example, the barrier material can include aluminum foil. For example, the aluminum foil can have a thickness of at least 1 micron, such as at least 100 microns, or even at least 500 microns. The support material can be selected from the group consisting of a thermoplastic material, a cured elastomer, a fibrous material, or any combination thereof. For example, the fibrous material can include a pulp material, such as cardboard. In another example, the thermoplastic material can include a polyolefin material, such as polyethylene or such as polypropylene. The cured elastomer can include a diene elastomer.

In an additional example, a desiccant is disposed within the enclosed volume. The desiccant can be selected from the group consisting of a metal oxide or hydroxide scavenger, a metal sulfate scavenger, a metal halide scavenger, a metal silicate, other inorganic scavengers, an organometallic scavenger, a metal ligand, organic scavengers, or any combination thereof.

In another example, the bonded abrasive article exhibits a Relative G-Ratio of at least 0.8 after 12 weeks with external conditions of 40°C and 80% relative humidity. In a further example, the article has an internal relative humidity not greater than 50% at 20°C after 25 weeks at 40°C and 80% relative humidity.

In a second aspect, an article includes a packaging material defining an enclosed volume and formed of a material having a water vapor transfer rate of not greater than 2.0 g/m²-day, a desiccant disposed within the enclosed volume, and a bonded abrasive article disposed within the enclosed volume. The bonded abrasive article includes abrasive grains dispersed in a polymer matrix. The polymer matrix includes hygroscopic material.

In an example of the second aspect, the water vapor transfer rate is not greater than 0.2 g/m²-day, such as not greater than 0.015 g/m²-day. The water vapor transfer rate can be at least 0.001 g/m²-day. For example, the water vapor transfer rate can be in a range of 0.001 g/m²-day and 0.01 g/m²-day.

In another example, the material is a rigid material. In a further example, the material is a sheet material.

In an additional example, the desiccant is selected from the group consisting of a metal oxide or hydroxide scavenger, a metal sulfate scavenger, a metal halide scavenger, a metal silicate, other inorganic scavengers, an organometallic scavenger, a metal ligand, organic scavengers, or any combination thereof. For example, the desiccant can have a capacity of at least 0.4 g H₂O/g desiccant, such as a capacity in a range of 0.4 g H₂O/g desiccant to 2.0 g H₂O/g desiccant.

In a further example, the material can include a barrier layer. The barrier layer can include polyester. In another example, the barrier layer includes aluminum foil. For example, the aluminum foil can have a thickness of at least 1 micron, such as at least 100 microns, or even at least 500 microns.

In another example, the bonded abrasive article exhibits a Relative G-Ratio of at least 0.8 after 12 weeks with external conditions of 40°C and 80% relative humidity. In an additional example, the article has an internal relative humidity not greater than 50% at 20°C after 25 weeks at 40oC and 80% relative humidity.

In a third aspect, a method of packaging a bonded abrasive product includes determining a water vapor transfer rate of a packaging material, establishing rating conditions, determining whether packaging meets a rating standard using a simulation device, increment an amount of desiccant when the packaging does not meet the rating standard, and determining whether the packaging with desiccant meets the rating standard.

In an example of the third aspect, the method further includes, when the packaging with desiccant does not meet the rating standard, repeating incrementing the amount of desiccant and determining whether the packaging with the desiccant meets the rating standard.

In a further example, the rating conditions include a temperature, an external relative humidity, and a desired product shelf life. The rating standard can include an internal relative humidity. In an additional example, the rating standard includes a moisture gain.

In another example, the method further includes inserting the desiccant into a package in accordance with an output from the simulation device, and inserting the bonded abrasive article.

In a fourth aspect, a method of packaging a bonded abrasive product includes determining a water vapor transfer rate of a packaging material, establishing rating conditions of a rating system, and determining, using a simulation device, an amount of desiccant to provide a package that meets a rating standard associated with the rating system. In an example of the fourth aspect, the method further includes inserting the desiccant into a package in accordance with an output from the simulation device, and inserting the bonded abrasive article.

In another example of the fourth aspect, determining the amount of desiccant includes, when the package with desiccant does not meet the rating standard, incrementing the amount of desiccant and determining whether the package with the desiccant meets the rating standard.

In a further example, the rating conditions include a temperature, an external relative humidity, and a period of time. In an example, the rating standard includes an internal relative humidity. In another example, the rating standard includes a moisture gain.

Note that not all of the activities described above in the general description or the examples are required, that a portion of a specific activity may not be required, and that one or more further activities may be performed in addition to those described. Still further, the order in which activities are listed are not necessarily the order in which they are performed.

In the foregoing specification, the concepts have been described with reference to specific embodiments. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of invention.

As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive-or and not to an exclusive-or. For example, a condition A or B is satisfied by any one of the following: A is true (or present) and B is false (or not present), A is false (or not present) and B is true (or present), and both A and B are true (or present).

Also, the use of "a" or "an" are employed to describe elements and components described herein. This is done merely for convenience and to give a general sense of the scope of the invention. This description should be read to include one or at least one and the singular also includes the plural unless it is obvious that it is meant otherwise.

## Claims

1. A packaged abrasive article (300) comprising:
a wall (302) defining an edge of an enclosed space (312) in which abrasive articles (304) are disposed, wherein the wall has a water vapor transfer rate not greater than 0.6 g/m²-day and wherein the abrasive articles (304) disposed within the enclosed volume comprise abrasive grains dispersed in a polymer matrix comprising hygroscopic material,
**characterized in that**
the wall (302) is a self-supporting wall (302) and includes
- a support material (402) comprising a fibrous material, and
- a barrier material (404) comprising a metal material and a polymeric material,
wherein the barrier material (404) defines an interior surface of the self-supporting wall (302) and is disposed between the support material (402) and the bonded abrasive article (304).

2. The packaged abrasive article of claim 1, wherein the water vapor transfer rate is in a range of 0.001 g/m²-day and 0.01 g/m²-day.

3. The packaged abrasive article of claim 1, wherein the metal material of the barrier material comprises aluminum.

4. The packaged abrasive article of claim 1, wherein the polymeric material of the barrier material comprises polyester.

5. The packaged abrasive article of claim 4, wherein the polyester includes polyethylene terephthalate, liquid crystal polymer, or any combination thereof.

6. The packaged abrasive article of claim 1, wherein the support material is selected from the group consisting of a thermoplastic material, a cured elastomer, a fibrous material, or any combination thereof.

7. The packaged abrasive article of claim 6, wherein the support material is a fibrous material that includes an impregnated glass fiber material.

8. The packaged abrasive article of claims 1 to 7, further comprising a desiccant disposed within the enclosed space, wherein the desiccant is selected from the group consisting of a metal oxide or hydroxide scavenger, a metal sulfate scavenger, a metal halide scavenger, a metal silicate, other inorganic scavengers, an organometallic scavenger, a metal ligand, organic scavengers, or any combination thereof.

9. The packaged abrasive article of claim 8, wherein the desiccant has a capacity of at least 0.4 g H₂O/g desiccant.

10. The packaged abrasive article of claim 1, wherein the water vapor transfer rate is not greater than 0.001 g/m²-day.

11. The packaged abrasive article of claim 1, wherein the polymer matrix is selected from the group consisting of phenolic resin, boron-modified resin, nano-particle-modified resin, urea-formaldehyde resin, acrylic resin, epoxy resin, polybenzoxazine, polyester resin, isocyanurate resin, melamine-formaldehyde resin, polyimide resin, other suitable thermosetting or thermoplastic resins, or any combination thereof.

12. The packaged abrasive article of claim 1, further comprising a bottom (314), and wherein the bottom is made of a self-supporting material having a barrier material and a support material.

13. The packaged abrasive article of claim 1, wherein the self-supporting wall can stand on its own without deviating more than 10% in either direction from a longitudinal dimension extending from top to bottom of the self-supporting wall.

14. The packaged abrasive article of claim 12, wherein the self-supporting wall is integrally formed to the bottom.

15. The packaged abrasive article of claim 1, wherein the barrier material is laminated to the support material.

## Patentansprüche

1. Verpackter Schleifartikel (300), umfassend:
eine Wand (302), die eine Umrandung eines abgeschlossenen Raums (312) definiert, in dem Schleifartikel (304) angeordnet sind,
wobei die Wand eine Wasserdampfdurchlässigkeitsrate von nicht mehr als 0,6 g/m²/Tag aufweist und wobei die innerhalb des abgeschlossenen Raums angeordneten Schleifartikel (304) Schleifkörner umfassen, die in einer Polymermatrix dispergiert sind, die hygroskopisches Material umfasst,
**dadurch gekennzeichnet, dass**
die Wand (302) eine selbsttragende Wand (302) ist und Folgendes beinhaltet:
- ein Trägermaterial (402), das ein faserförmiges Material umfasst, und
- ein Barrierematerial (404), das ein Metallmaterial und ein polymeres Material umfasst,
wobei das Barrierematerial (404) eine Innenfläche der selbsttragenden Wand (302) definiert und zwischen dem Trägermaterial (402) und dem gebondeten Schleifartikel (304) angeordnet ist.

2. Verpackter Schleifartikel nach Anspruch 1, wobei die Wasserdampfdurchlässigkeitsrate in einem Bereich von 0,001 g/m²/Tag und 0,01 g/m²/Tag liegt.

3. Verpackter Schleifartikel nach Anspruch 1, wobei das Metallmaterial des Barrierematerials Aluminium umfasst.

4. Verpackter Schleifartikel nach Anspruch 1, wobei das polymere Material des Barrierematerials Polyester umfasst.

5. Verpackter Schleifartikel nach Anspruch 4, wobei das Polyester Polyethylenterephthalat, Flüssigkristallpolymer oder eine beliebige Kombination davon beinhaltet.

6. Verpackter Schleifartikel nach Anspruch 1, wobei das Trägermaterial aus der Gruppe bestehend aus einem thermoplastischen Material, einem gehärteten Elastomer, einem faserförmigen Material oder einer beliebigen Kombination davon ausgewählt ist.

7. Verpackter Schleifartikel nach Anspruch 6, wobei das Trägermaterial ein faserförmiges Material ist, das ein imprägniertes Glasfasermaterial beinhaltet.

8. Verpackter Schleifartikel nach den Ansprüchen 1 bis 7, der weiterhin ein Trockenmittel umfasst, das innerhalb des abgeschlossenen Raums angeordnet ist, wobei das Trockenmittel aus der Gruppe bestehend aus einem Metalloxid- oder -hydroxid-Radikalfänger, einem Metallsulfat-Radikalfänger, einem Metallhalogenid-Radikalfänger, einem Metallsilikat, anderen anorganischen Radikalfängern, einem organometallischen Radikalfänger, einem Metallliganden, organischen Radikalfängern oder einer beliebigen Kombination davon ausgewählt ist.

9. Verpackter Schleifartikel nach Anspruch 8, wobei das Trockenmittel eine Kapazität von mindestens 0,4 H₂O/g Trockenmittel aufweist.

10. Verpackter Schleifartikel nach Anspruch 1, wobei die Wasserdampfdurchlässigkeitsrate nicht mehr als 0,001 g/m²/Tag beträgt.

11. Verpackter Schleifartikel nach Anspruch 1, wobei die Polymermatrix aus der Gruppe bestehend aus Phenolharz, bormodifiziertem Harz, nanopartikelmodifiziertem Harz, Harnstoff-Formaldehyd-Harz, Acrylharz, Epoxidharz, Polybenzoxazin, Polyesterharz, Isocyanuratharz, MelaminFormaldehyd-Harz, Polyimidharz, anderen geeigneten duroplastischen oder thermoplastischen Harzen oder einer beliebigen Kombination davon ausgewählt ist.

12. Verpackter Schleifartikel nach Anspruch 1, der weiterhin einen Boden (314) umfasst, und wobei der Boden aus einem selbstragenden Material mit einem Barrierematerial und einem Trägermaterial hergestellt ist.

13. Verpackter Schleifartikel nach Anspruch 1, wobei die selbsttragende Wand eigenständig stehen kann, ohne um mehr als 10 % in einer beliebigen Richtung von einer Längsdimension, die sich von der Oberseite zum Boden der selbsttragenden Wand erstreckt, abzuweichen.

14. Verpackter Schleifartikel nach Anspruch 12, wobei die selbsttragende Wand einstückig an den Boden geformt ist.

15. Verpackter Schleifartikel nach Anspruch 1, wobei das Barrierematerial an das Trägermaterial laminiert ist.

## Revendications

1. Article abrasif emballé (300) comprenant :
une paroi (302) définissant un bord d'un espace confiné (312) dans lequel sont disposées des particules abrasives (304), la paroi ayant une vitesse de transfert de vapeur d'eau inférieure ou égale à 0,6 g/m²/jour et les articles abrasifs (304) disposés dans le volume confiné comprenant des grains abrasifs dispersés dans une matrice polymère contenant une matière hygroscopique,
**caractérisé en ce que**
la paroi (302) est une paroi autoporteuse (302) et comprend
- un matériau de soutien (402) contenant de la matière fibreuse, et
- un matériau de barrière (404) contenant un matériau métallique et un matériau polymère, le matériau de barrière (404) définissant une surface intérieure de la paroi autoporteuse (302) et étant disposé entre le matériau de soutien (402) et l'article abrasif lié (304).

2. Article abrasif emballé selon la revendication 1, dans lequel la vitesse de transfert de vapeur d'eau est comprise entre 0,001 g/m²/jour et 0,01 g/m²/jour.

3. Article abrasif emballé selon la revendication 1, dans lequel le matériau métallique du matériau de barrière contient de l'aluminium.

4. Article abrasif emballé selon la revendication 1, dans lequel le matériau polymère du matériau de barrière contient du polyester.

5. Article abrasif emballé selon la revendication 4, dans lequel le polyester contient du poly(térephtalate d'éthylène), un polymère à cristaux liquides ou toute combinaison de ces derniers.

6. Article abrasif emballé selon la revendication 1, dans lequel le matériau de soutien est choisi dans l'ensemble constitué d'un matériau thermoplastique, d'un élastomère durci, d'une matière fibreuse ou de toute combinaison de ces derniers.

7. Article abrasif emballé selon la revendication 6, dans lequel le matériau de soutien est une matière fibreuse qui contient un matériau à fibre de verre imprégnée.

8. Article abrasif emballé selon les revendications 1 à 7, comprenant en outre un dessiccatif disposé dans l'espace confiné, le dessiccatif étant choisi dans l'ensemble constitué d'un oxyde métallique ou d'un désactivateur à hydroxyde, d'un désactivateur à sulfate métallique, d'un désactivateur à halogénure métallique, d'un silicate métallique, d'autres désactivateurs minéraux, d'un désactivateur organométallique, d'un liant métallique, de désactivateurs organiques ou de toute combinaison de ces derniers.

9. Article abrasif emballé selon la revendication 8, dans lequel le dessiccatif a une capacité d'au moins 0,4 g H₂O/g dessiccatif.

10. Article abrasif emballé selon la revendication 1, dans lequel la vitesse de transfert de vapeur d'eau est inférieure ou égale à 0,001 g/m²/jour.

11. Article abrasif emballé selon la revendication 1, dans lequel la matrice polymère est choisie dans l'ensemble constitué de résine phénolique, de résine modifiée au bore, de résine modifiée par des nanoparticules, de résine urée-formaldéhyde, de résine acrylique, de résine époxy, de polybenzoxazine, de résine polyester, de résine isocyanurate, de résine mélamine-formaldéhyde, de résine polyimide, d'autres résines thermodurcissables ou thermoplastiques adéquates ou de toute combinaison de ces dernières.

12. Article abrasif emballé selon la revendication 1, comprenant en outre un fond (314) et dans lequel le fond est constitué d'un matériau autoporteur comportant d'un matériau de barrière et d'un matériau de soutien.

13. Article abrasif emballé selon la revendication 1, dans lequel la paroi autoporteuse peut tenir d'elle-même sans dévier de plus de 10 % dans quelque direction que ce soit d'une dimension longitudinale s'étendant du haut au bas de la paroi autoporteuse.

14. Article abrasif emballé selon la revendication 12, dans lequel la paroi autoporteuse est formée d'un seul tenant jusqu'au fond.

15. Article abrasif emballé selon la revendication 1, dans lequel le matériau de barrière est stratifié au matériau de soutien.
